# EUROPÄISCHE PATENTANMELDUNG

(11) **EP 1 666 704 A2**
(43) Veröffentlichungstag der Anmeldung: **07.06.2006**
(21) Anmeldenummer: 05025750.0
(22) Anmeldetag: 25.11.2005
(51) Int. Cl.: F01N 3/20, F02B 37/18, F01N 3/035, F01N 3/031

(54) **Brennkraftmaschine mit Abgasaufladung**

(30) Priorität: 03.12.2004 DE 102004058371
(71) Anmelder: DaimlerChrysler AG, 70567 Stuttgart (DE)
(72) Erfinder: Elfeldt, Jan-Peter, 20144 Hamburg (DE); Hülsberg, Thomas, 21244 Buchholz/Holm Seppensen (DE); Reinhardt, Olav, 22607 Hamburg (DE); Wagenplast, Michael, 74193 Schwaigern (DE)

(57) **Zusammenfassung**

Die Erfindung betrifft eine Brennkraftmaschine mit Abgasaufladung, mit mindestens einer mehrere Zylinder (13,14) aufweisenden Zylindergruppe (11,12), wobei der oder jeder Zylindergruppe (11,12) jeweils eine Hochdruckturbine (15,16) einer Hochdruckstufe eines Abgasturboladers nachgeschaltet ist, wobei der oder jeder Hochdruckturbine (15,16) mindestens eine Niederdruckturbine (21) einer Niederdruckstufe des Abgasturboladers nachgeschaltet ist, wobei der oder jeder Hockdruckstufe des Abgasturboladers jeweils mindestens eine, von einer Steuer- bzw. Regeleinrichtung verschließbare bzw. öffenbare Bypassleitung zugeordnet ist, derart, dass in einem Teillastbetrieb bei einer geschlossenen ersten Bypassleitung (23,24) ein die jeweilige Zylindergruppe verlassender Abgasstrom vollständig über die jeweilige Hochdruckturbine (15,16) der Niederdruckturbine (21) zuführbar ist.

## Beschreibung

Die Erfindung betrifft eine Brennkraftmaschine mit Abgasaufladung.

Die DE 198 37 978 A1 offenbart eine sechszylindrige Brennkraftmaschine in Reihenbauweise, die über einen Abgasturbolader zweistufig aufgeladen wird. Gemäß diesem Stand der Technik verfügt die sechszylindrige Brennkraftmaschine über zwei Zylindergruppen aus jeweils drei Zylindern, wobei jeder dieser beiden Zylindergruppen eine Hochdruckturbine einer Hochdruckstufe des Abgasturboladers nachgeschaltet ist. Den beiden Hochdruckturbinen ist jeweils eine Bypassleitung zugeordnet, wobei jede der Bypassleitungen über eine als Rohrschalter ausgebildete Steuerungseinrichtung geöffnet sowie geschlossen werden kann. Den beiden Hochdruckturbinen des Abgasturboladers ist eine gemeinsame Niederdruckturbine einer Niederdruckstufe des Abgasturboladers nachgeschaltet. Durch die Hochdruckturbinen oder die Bypassleitungen geleitete Abgasströme sind der gemeinsamen Niederdruckturbine des Abgasturboladers zuführbar.

Die DE 31 15 739 A1 offenbart eine Brennkraftmaschine mit einstufiger Abgasturboaufladung. Gemäß diesem Stand der Technik ist ein die Brennkraftmaschine verlassender Abgasstrom einer Turbine eines Abgasturboladers zuführbar, wobei der durch die Turbine des Abgasturboladers geleitete Abgasstrom zuerst durch einen Startkatalysator und anschließend durch einen Hauptkatalysator geleitet wird. Stromaufwärts der Turbine des Abgasturboladers zweigt eine Bypassleitung ab, die zwischen den Startkatalysator und den Hauptkatalysator in die Abgasleitung mündet. Die Bypassleitung kann über ein Ventil geöffnet sowie geschlossen werden.

Hinsichtlich weiteren Standes der Technik sei auf die DE 102 33 495 A1 sowie auf die DE 100 14 755 A1 verwiesen.

Hiervon ausgehend liegt der vorliegenden Erfindung das Problem zu Grunde, eine neuartige Brennkraftmaschine mit Abgasaufladung zu schaffen.

Dieses Problem wird durch eine Brennkraftmaschine mit Abgasaufladung gemäß Patentanspruch 1 gelöst. Die erfindungsgemäße Brennkraftmaschine umfasst mindestens eine mehrere Zylinder aufweisende Zylindergruppe, wobei der oder jeder Zylindergruppe jeweils eine Hochdruckturbine einer Hochdruckstufe eines Abgasturboladers nachgeschaltet ist, wobei der oder jeder Hochdruckturbine mindestens eine Niederdruckturbine einer Niederdruckstufe des Abgasturboladers nachgeschaltet ist, wobei der oder jeder Hockdruckstufe des Abgasturboladers jeweils mindestens eine, von einer Steuer- bzw. Regeleinrichtung verschließbare bzw. öffenbare Bypassleitung zugeordnet ist, derart, dass in einem Teillastbetrieb bei einer geschlossenen ersten Bypassleitung ein die jeweilige Zylindergruppe verlassender Abgasstrom vollständig über die jeweilige Hochdruckturbine der Niederdruckturbine zuführbar ist, und dass in einem Volllastbetrieb bei geöffneter erster Bypassleitung der Abgasstrom einerseits über die jeweilige Hochdruckturbine und andererseits unter Umgehung der jeweiligen Hochdruckturbine unmittelbar der Niederdruckturbine zuführbar ist, und wobei sowohl die oder jede Hochdruckstufe als auch die oder jede Niederdruckstufe des Abgasturboladers eine Abgasnachbehandlungseinrichtung umfasst.

Mit der hier vorliegenden Erfindung wird erstmals eine Brennkraftmaschine mit zweistufiger Abgasturboaufladung vorgeschlagen, bei der sowohl die Hochdruckstufe als auch die Niederdruckstufe eine Abgasnachbehandlungseinrichtung umfasst. So ist im Sinne der hier vorliegenden Erfindung sowohl der oder jeder Hochdruckturbine als auch der oder jeder Niederdruckturbine jeweils eine Abgasnachbehandlungseinrichtung nachgeschaltet. Mit der hier vorliegenden Erfindung kann das Abgasemissionsverhalten der Brennkraftmaschine sowie der Wirkungsgrad derselben optimiert werden.

Nach einer vorteilhaften Weiterbildung der Erfindung umfasst die oder jede Hochdruckstufe des Abgasturboladers einen Hochdruckverdichter, eine Hochdruckturbine, eine Hochdruckabgasnachbehandlungseinrichtung und zwei Bypassleitungen. Die Hochdruckabgasnachbehandlungseinrichtung ist der Hochdruckturbine derart nachgeschaltet ist, dass ein durch die Hochdruckturbine geführter Abgasstrom nach Verlassen der Hochdruckturbine der Hochdruckabgasnachbehandlungseinrichtung über eine von der Hochdruckturbine zu der Hochdruckabgasnachbehandlungseinrichtung führende Abgasleitung zuführbar ist. Ein durch die erste Bypassleitung geführter Abgasstrom ist unter Umgehung der Hochdruckturbine und der Hochdruckabgasnachbehandlungseinrichtung der Niederdruckturbine des Abgasturboladers zuführbar. Eine zweite Bypassleitung zweigt stromabwärts der Hochdruckturbine und stromaufwärts der Hochdruckabgasnachbehandlungseinrichtung ab und mündet in die erste Bypassleitung, so dass ein durch die Hochdruckturbine geführter Abgasstrom nach Verlassen der Hochdruckturbine entweder der Hochdruckabgasnachbehandlungseinrichtung und/oder unter Umgehung der Hochdruckabgasnachbehandlungseinrichtung unmittelbar der Niederdruckturbine zuführbar ist.

Vorzugsweise umschließt in die erste Bypassleitung die Hochdruckabgasnachbehandlungseinrichtung der jeweiligen Hochdruckstufe, derart, dass die jeweilige Hochdruckabgasnachbehandlungseinrichtung im Volllastbetrieb bei geöffneter erster Bypassleitung allseitig von Abgas umströmt ist, sodass ein durch die jeweilige erste Bypassleitung geführter Abgasstrom eine Erwärmung der jeweiligen Hochdruckabgasnachbehandlungseinrichtung bewirkt. Die erste Bypassleitung umschließt vorzugsweise auch die von der Hochdruckturbine zu der Hochdruckabgasnachbehandlungseinrichtung führende Abgasleitung.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Blockschaltbild einer erfindungsgemäßen Brennkraftmaschine mit Abgasaufladung;
- Fig. 2: das Detail II der erfindungsgemäßen Brennkraftmaschine mit Abgasaufladung gemäß Fig. 1;
- Fig. 3: ein alternatives Detail der erfindungsgemäßen Brennkraftmaschine mit Abgasaufladung; und
- Fig. 4: ein weiteres alternatives Detail der erfindungsgemäβen Brennkraftmaschine mit Abgasaufladung.

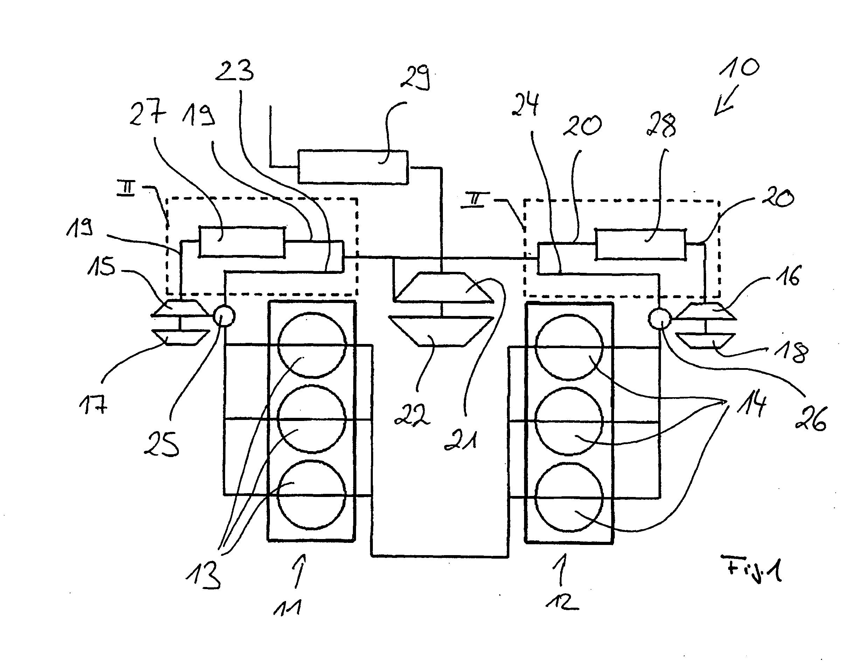

Nachfolgend wird die hier vorliegende Erfindung unter Bezugnahme auf Fig. 1 bis 4 in größerem Detail beschrieben.

Fig. 1 zeigt stark schematisiert ein Abgasleitungssystem einer erfindungsgemäßen Brennkraftmaschine 10, die gemäß Fig. 1 als sechszylindrige Brennkraftmaschine in V-Bauweise mit zwei Zylindergruppen 11 und 12 aus jeweils drei Zylindern 13 bzw. 14 ausgebildet ist. Jeder Zylindergruppe 11 bzw. 12 ist jeweils eine Hochdruckturbine 15 bzw. 16 einer Hochdruckstufe eines Abgasturboladers zugeordnet, wobei die Hochdruckturbinen 15 bzw. 16 Hochdruckverdichter 17 bzw. 18 der jeweiligen Hochdruckstufe zur Abgasturboaufladung in bekannter Art und Weise antreiben. Der durch die Hochdruckturbinen 15 bzw. 16 geleitete Abgasstrom der jeweiligen Zylindergruppe 11 bzw. 12 ist über eine der Hochdruckturbine 15 bzw. 16 nachgeschaltete Abgasleitung 19 bzw. 20 einer gemeinsamen Niederdruckturbine 21 einer Niederdruckstufe des Abgasturboladers zuführbar. Die Niederdruckturbine 21 der Niederdruckstufe treibt in bekannter Art und Weise einen Niederdruckverdichter 22 des Abgasturboladers an.

Jeder der beiden Hochdruckturbinen 15 und 16 der beiden Hochdruckstufen des Abgasturboladers ist jeweils eine erste Bypassleitung 23 bzw. 24 zugeordnet. Die ersten Bypassleitungen 23 und 24 können über jeweils eine Steuerungseinrichtung 25 bzw. 26 geöffnet bzw. geschlossen werden. Im Teillastbetrieb der Brennkraftmaschine sind die Steuerungseinrichtungen 25 bzw. 26 derart angesteuert, dass die ersten Bypassleitungen 23 und 24 geschlossen sind und demnach ein die Zylindergruppen 11 und 12 verlassender Abgasstrom ausschließlich über die jeweilige Hochdruckturbine 15 bzw. 16 der Niederdruckturbine 21 des Abgasturboladers zuführbar ist. Im Volllastbetrieb der Brennkraftmaschine kann mit Hilfe der Steuerungseinrichtungen 25 bzw. 26 die entsprechende erste Bypassleitung 23 bzw. 24 geöffnet werden, so dass der Niederdruckturbine 21 Abgas einerseits mittelbar über die Hochdruckturbine 15 bzw. 16 und andererseits unmittelbar über die entsprechende Bypassleitung 23 bzw. 24 zugeführt werden kann.

Im Sinne der hier vorliegenden Erfindung ist sowohl beiden Hochdruckturbinen 15 bzw. 16 als auch der Niederdruckturbine 21 jeweils eine Abgasnachbehandlungseinrichtung nachgeschaltet. So kann Fig. 1 entnommen werden, dass der Hochdruckturbine 15 sowie der Hochdruckturbine 16 jeweils eine Hochdruckabgasnachbehandlungseinrichtung 27 bzw. 28 nachgeschaltet ist. Die erste Bypassleitung 23 bzw. 24 mündet jeweils stromabwärts der jeweiligen Hochdruckabgasnachbehandlungseinrichtung 27 bzw. 28 in die jeweilige Abgasleitung 19 bzw. 20. Mit Hilfe der ersten Bypassleitung 23 und 24 kann demnach im Volllastbetrieb ein Abgasstrom sowohl an der Hochdruckturbine 15 bzw. 16 als auch an der der Hochdruckturbine 15 bzw. 16 nachgeschalteten Hochdruckabgasnachbehandlungseinrichtung 27 bzw. 28 vorbeigeführt werden. Der gemeinsamen Niederdruckturbine 21 ist eine Niederdruckabgasbehandlungseinrichtung 29 nachgeschaltet.

Neben den ersten Bypassleitungen 23, 24 können auch nicht dargestellte zweite Bypassleitungen vorhanden sein, die stromabwärts der Hochdruckturbine 15, 16 und stromaufwärts der Hochdruckabgasnachbehandlungseinrichtung 27, 28 der jeweiligen Hochdruckstufe von den Abgasleitungen 19, 20 abzweigen und in die jeweilige erste Bypassleitung 23, 24 münden. Ein durch die Hochdruckturbine 15 bzw. 16 geführter Abgasstrom ist so nach Verlassen der Hochdruckturbine 15 bzw. 16 entweder der Hochdruckabgasnachbehandlungseinrichtung 27 bzw. 28 und/oder unter Umgehung der Hochdruckabgasnachbehandlungseinrichtung 27 bzw. 28 der Niederdruckturbine 21 zuführbar. Die zweiten Bypassleitungen sind wiederum von einer Steuer- bzw. Regeleinrichtung verschließbar bzw. öffenbar.

Über die nicht dargestellten zweiten Bypassleitungen kann demnach ein durch die Hochdruckturbine 15 bzw. 16 geführter Abgasstrom an der Hochdruckabgasnachbehandlungseinrichtung 27 bzw. 28 vorbeigeführt werden, sodass der Abgasstrom unter Umgehung der Hochdruckabgasnachbehandlungseinrichtung 27 bzw. 28 der Niederdruckstufe zuführbar ist. Hierdurch kann der Wirkungsgrad der erfindungsgemäßen Brennkraftmaschine abermals verbessert werden, da so auch im Teillastbetrieb der Niederdruckstufe und damit der Niederdruckabgasnachbehandlungseinrichtung 29 heißeres Abgas mit einem höherem Brennstoffgehalt zuführbar ist.

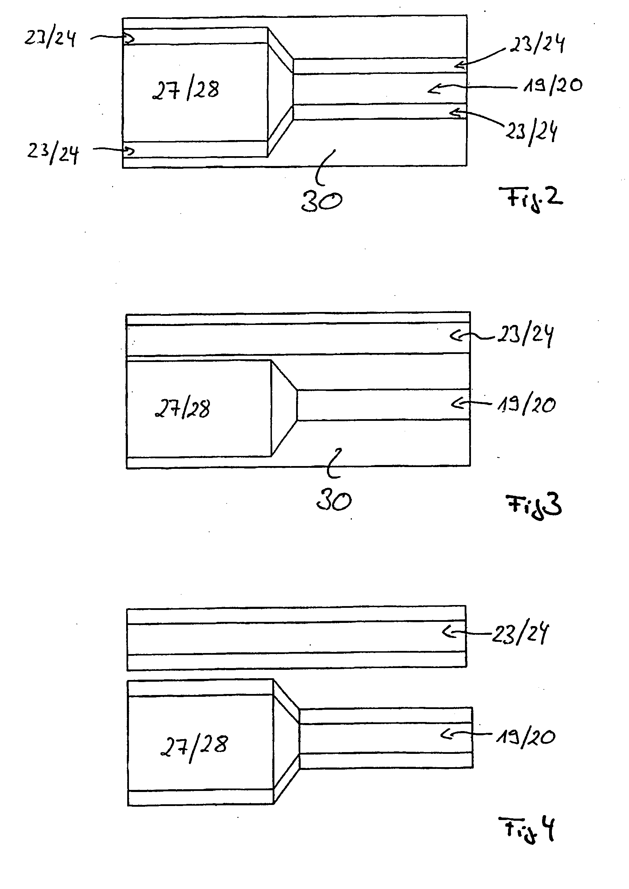

Nach einer vorteilhaften Weiterbildung der hier vorliegenden Erfindung sind im Bereich jeder Hochdruckstufe die erste Bypassleitung 23 bzw. 24 und die Hochdruckabgasnachbehandlungseinrichtung 27 bzw. 28 in ein gemeinsames Gehäuse 30 integriert. Dies kann Fig. 2 und 3 entnommen werden, wobei im Ausführungsbeispiel der Fig. 2 und 3 auch die von der jeweiligen Hochdruckturbine 15 bzw. 16 in Richtung auf die Hochdruckabgasnachbehandlungseinrichtung 27 bzw. 28 führende Abgasleitung 19 bzw. 20 in das Gehäuse 30 integriert ist.

Im Ausführungsbeispiel der Fig. 2 umschließt die erste Bypassleitung 23 bzw. 24 konzentrisch einerseits die Abgasleitung 19 bzw. 20 und andererseits die Hochdruckabgasnachbehandlungseinrichtung 27 bzw. 28. Hierdurch wird gewährleistet, dass dann, wenn im Volllastbetrieb die Bypassleitung 23 bzw. 24 geöffnet ist, die jeweilige Hochdruckabgasnachbehandlungseinrichtung 27 bzw. 28 allseitig von Abgas umströmt wird, um so eine Erwärmung der jeweiligen Hochdruckabgasnachbehandlungseinrichtung 27 bzw. 28 zu bewerkstelligen. Hierdurch wird gewährleistet, dass die Hochdruckabgasnachbehandlungseinrichtung 27 bzw. 28 immer auf einem hohen Temperaturniveau gehalten wird, so dass bei einem Umschalten von Volllastbetrieb auf Teillastbetrieb in der Hochdruckabgasnachbehandlungseinrichtung 19 bzw. 20 sofort Emissionen umgewandelt werden können. Im Bereich zwischen der Bypassleitung 23 bzw. 24 und der Abgasleitung 19 bzw. 20 kann eine Luftspaltisolierung vorgesehen sein, um einen Wärmeübertrag zwischen der Bypassleitung 23 bzw. 24 und der Abgasleitung 19 bzw. 20 zu unterdrücken und diesen Wärmeübergang lediglich im Bereich der Hochdruckabgasnachbehandlungseinrichtung 27 bzw. 28 zuzulassen.

Auch im Ausführungsbeispiel der Fig. 3 ist die erste Bypassleitung 23 bzw. 24, die Abgasleitung 19 bzw. 20 und die Hochdruckabgasnachbehandlungseinrichtung 27 bzw. 28 in einem gemeinsamen Gehäuse 30 integriert. Im Ausführungsbeispiel der Fig. 3 umschließt jedoch die Bypassleitung 23 bzw. 24 nicht allseitig die Hochdruckabgasnachbehandlungseinrichtung 27 bzw. 28 sowie die Abgasleitung 19 bzw. 20. Auch mit der Anordnung gemäß Fig. 3 kann im Teillastbetrieb ein Wärmeübergang von der Bypassleitung 23 bzw. 24 in Richtung auf die Hochdruckabgasnachbehandlungseinrichtung 27 bzw. 28 etabliert werden, wobei jedoch im Ausführungsbeispiel der Fig. 2 der Wärmeübergang wesentlich effektiver ist.

In dem Fall, in dem neben der ersten Bypassleitung 23 bzw. 24 auch die nicht dargestellte zweite Bypassleitung vorhanden ist, kann auch die zweite Bypassleitung in das gemeinsame Gehäuse 30 integriert sein. Die zweite Bypassleitung zweigt von der Abgasleitung 19 bzw. 20, die von der Hochdruckturbine 15 bzw. 16 zu der Hochdruckabgasnachbehandlungseinrichtung 27 bzw. 28 führt, ab und mündet in die erste Bypassleitung 23 bzw. 24.

In der Variante der Fig. 4 ist die jeweilige erste Bypassleitung 23 bzw. 24 von der Hochdruckabgasnachbehandlungseinrichtung 27 bzw. 28 getrennt, ebenso wie von der Abgasleitung 19 bzw. 20, die von der jeweiligen Hochdruckturbine 15 bzw. 16 zu der der Hochdruckturbine 15 bzw. 16 nachgeschalteten Hochdruckabgasnachbehandlungseinrichtung 27 bzw. 28 führt. Hierdurch wird ein Wärmeübergang zwischen der Bypassleitung 23 bzw. 24 und der Hochdruckabgasnachbehandlungseinrichtung 27 bzw. 28 unterbunden.

An dieser Stelle sei darauf hingewiesen, dass die Hochdruckabgasnachbehandlungseinrichtungen 27 bzw. 28 auch als Vorkatalysatoren und die Niederdruckabgasnachbehandlungseinrichtung 29 als Hauptkatalysator bezeichnet werden kann. Sowohl die Hochdruckabgasnachbehandlungseinrichtungen 27 bzw. 28 als auch die Niederdruckabgasnachbehandlungseinrichtung 29 kann als Oxidationskatalysator oder Partikelfilter oder als eine Kombination aus Oxidationskatalysator und Partikelfilter ausgebildet sein.

Obwohl unter Bezugnahme auf Fig. 1 die Erfindung am Beispiel einer sechszylindrige Brennkraftmaschine in V-Bauweise beschrieben wurde, ist die Erfindung auch bei Brennkraftmaschinen in Reihenbauweise oder bei Brennkraftmaschinen mit einer höheren Anzahl oder auch einer niedrigeren Anzahl an Zylindern realisierbar. Auch kann die Erfindung bei Brennkraftmaschinen in so genannter W-Bauweise oder VR-Bauweise zum Einsatz kommen.

### Bezugszeichenliste

- 10: Brennkraftmaschine
- 11: Zylindergruppe
- 12: Zylindergruppe
- 13: Zylinder
- 14: Zylinder
- 15: Hochdruckturbine
- 16: Hochdruckturbine
- 17: Hochdruckverdichter
- 18: Hochdruckverdichter
- 19: Abgasleitung
- 20: Abgasleitung
- 21: Niederdruckturbine
- 22: Niederdruckverdichter
- 23: Bypassleitung
- 24: Bypassleitung
- 25: Steuerungseinrichtung
- 26: Steuerungseinrichtung
- 27: Hochdruckabgasnachbehandlungseinrichtung
- 28: Hochdruckabgasnachbehandlungseinrichtung
- 29: Niederdruckabgasnachbehandlungseinrichtung
- 30: Gehäuse

## Patentansprüche

1. Brennkraftmaschine mit Abgasaufladung, mit mindestens einer mehrere Zylinder (13, 14) aufweisenden Zylindergruppe (11, 12), wobei der oder jeder Zylindergruppe (11, 12) jeweils eine Hochdruckturbine (15, 16) einer Hochdruckstufe eines Abgasturboladers nachgeschaltet ist, wobei der oder jeder Hochdruckturbine (15, 16) mindestens eine Niederdruckturbine (21) einer Niederdruckstufe des Abgasturboladers nachgeschaltet ist, wobei der oder jeder Hockdruckstufe des Abgasturboladers jeweils mindestens eine, von einer Steuer- bzw. Regeleinrichtung verschließbare bzw. öffenbare Bypassleitung zugeordnet ist, derart, dass in einem Teillastbetrieb bei einer geschlossenen ersten Bypassleitung (23, 24) ein die jeweilige Zylindergruppe verlassender Abgasstrom vollständig über die jeweilige Hochdruckturbine (15, 16) der Niederdruckturbine (21) zuführbar ist, und dass in einem Volllastbetrieb bei geöffneter erster Bypassleitung (23, 24) der Abgasstrom einerseits über die jeweilige Hochdruckturbine (15, 16) und andererseits unter Umgehung der jeweiligen Hochdruckturbine (15, 16) unmittelbar der Niederdruckturbine (21) zuführbar ist, und wobei sowohl die oder jede Hochdruckstufe als auch die oder jede Niederdruckstufe des Abgasturboladers eine Abgasnachbehandlungseinrichtung (27, 28, 29) umfasst.

2. Brennkraftmaschine nach Anspruch 1,
**dadurch gekennzeichnet,**
**dass** die oder jede Hochdruckstufe des Abgasturboladers einen Hochdruckverdichter (17, 18), eine Hochdruckturbine (15, 16), eine Hochdruckabgasnachbehandlungseinrichtung (27, 28) und mindestens eine Bypassleitung umfasst, wobei die Hochdruckabgasnachbehandlungseinrichtung (27, 28) der jeweiligen Hochdruckturbine (15, 16) derart nachgeschaltet ist, dass ein durch die Hochdruckturbine (15, 16) geführter Abgasstrom nach Verlassen der Hochdruckturbine (15, 16) der Hochdruckabgasnachbehandlungseinrichtung (27, 28) zuführbar ist, und dass ein durch die erste Bypassleitung (23, 24) geführter Abgasstrom unter Umgehung der Hochdruckturbine (15, 16) und der Hochdruckabgasnachbehandlungseinrichtung (27, 28) der Niederdruckturbine (21) der Niederdruckstufe des Abgasturboladers zuführbar ist.

3. Brennkraftmaschine nach Anspruch 2,
**dadurch gekennzeichnet,**
**dass** die oder jede Hochdruckstufe neben der ersten Bypassleitung jeweils eine zweite Bypassleitung umfasst,
wobei die zweite Bypassleitung von einer Steuer- bzw. Regeleinrichtung verschließbar bzw. öffenbar ist.

4. Brennkraftmaschine nach Anspruch 3,
**dadurch gekennzeichnet,**
**dass** die zweite Bypassleitung stromabwärts der Hochdruckturbine und stromaufwärts der Hochdruckabgasnachbehandlungseinrichtung abzweigt und in die erste Bypassleitung mündet, derart, dass ein durch die Hochdruckturbine geführter Abgasstrom nach Verlassen der Hochdruckturbine entweder der Hochdruckabgasnachbehandlungseinrichtung und/oder unter Umgehung der Hochdruckabgasnachbehandlungseinrichtung der Niederdruckturbine zuführbar ist.

5. Brennkraftmaschine nach einem oder mehreren der Ansprüche 1 bis 4,
**gekennzeichnet durch**
mindestens zwei mehrere Zylinder (13, 14) aufweisende Zylindergruppen (11, 12), wobei einer ersten Zylindergruppe (11) eine erste Hochdruckturbine (15) des Abgasturboladers und einer zweiten Zylindergruppe (12) eine zweite Hochdruckturbine (16) des Abgasturboladers nachgeschaltet ist, wobei der ersten Hochdruckturbine (15) und der zweiten Hochdruckturbine (16) eine gemeinsame Niederdruckturbine (21) des Abgasturboladers nachgeschaltet ist, und
wobei der ersten und der zweiten Hochdruckturbine (15, 16) jeweils eine Hochdruckabgasnachbehandlungseinrichtung (27, 28) und der Niederdruckturbine (21) eine Niederdruckabgasnachbehandlungseinrichtung (29) nachgeschaltet ist.

6. Brennkraftmaschine nach Anspruch 5,
**dadurch gekennzeichnet,**
**dass** die erste Zylindergruppe (11) und die zweite Zylindergruppe (12) in Reihen-Bauweise oder in V-Bauweise angeordnet sind.

7. Brennkraftmaschine nach einem oder mehreren der Ansprüche 1 bis 6,
**dadurch gekennzeichnet,**
**dass** die erste Bypassleitung (23, 24) und die Hochdruckabgasnachbehandlungseinrichtung (27, 28) der jeweiligen Hochdruckstufe des Abgasturboladers in ein gemeinsames Gehäuse (30) integriert sind.

8. Brennkraftmaschine nach Anspruch 7,
**dadurch gekennzeichnet,**
**dass** zusätzlich eine von der Hochdruckturbine (15, 16) zu der Hochdruckabgasnachbehandlungseinrichtung (27, 28) führende Abgasleitung (19, 20) in das gemeinsames Gehäuse (30) integriert ist.

9. Brennkraftmaschine nach Anspruch 8,
**dadurch gekennzeichnet,**
**dass** zusätzlich die zweite Bypassleitung, die von der Abgasleitung, von der Hochdruckturbine zu der Hochdruckabgasnachbehandlungseinrichtung führt, abzweigt und die erste Bypassleitung mündet, in das gemeinsames Gehäuse integriert ist.

10. Brennkraftmaschine nach einem oder mehreren der Ansprüche 1 bis 9,
**dadurch gekennzeichnet,**
**dass** die erste Bypassleitung (23, 24) die Hochdruckabgasnachbehandlungseinrichtung (27, 28) der jeweiligen Hochdruckstufe derart umschließt, dass die jeweilige Hochdruckabgasnachbehandlungseinrichtung (27, 28) im Volllastbetrieb bei geöffneter erster Bypassleitung (23, 24) allseitig von Abgas umströmt ist.

11. Brennkraftmaschine nach Anspruch 10,
**dadurch gekennzeichnet,**
**dass** die erste Bypassleitung (23, 24) zusätzlich eine von der Hochdruckturbine (15, 16) zu der Hochdruckabgasnachbehandlungseinrichtung (27, 28) führende Abgasleitung (19, 20) umschließt.

12. Brennkraftmaschine nach einem oder mehreren der Ansprüche 7 bis 11,
**dadurch gekennzeichnet,**
**dass** ein durch die erste Bypassleitung (23, 24) geführter Abgasstrom eine Erwärmung der jeweiligen Hochdruckabgasnachbehandlungseinrichtung (27, 28) bewirkt.

13. Brennkraftmaschine nach einem oder mehreren der Ansprüche 1 bis 12,
**dadurch gekennzeichnet,**
**dass** die erste Bypassleitung (23, 24) und die Hochdruckabgasnachbehandlungseinrichtung (27, 28) der jeweiligen Hochdruckstufe des Abgasturboladers als separate Baugruppen ausgebildet bzw. voneinander getrennt sind.
